# FASCICULE DE BREVET EUROPEEN

(11) **EP 0 719 744 B1**
(45) Date de publication et mention de la délivrance du brevet: **31.03.1999**
(21) Numéro de dépôt: 95402927.8
(22) Date de dépôt: 22.12.1995
(51) Int. Cl.: C04B 20/10, E01F 15/04

(54) **Additif fibreux pour matériaux à base de ciment, et matériaux le contenant**
Faserförmiger Zuschlag für Zementmaterial, und dieses erhaltendes Material
Fibrous additive for cement material and material containing the additive

(30) Priorité: 27.12.1994 FR 9415713
(43) Date de publication de la demande: 03.07.1996
(73) Titulaire: ORGEL, 92400 Courbevoie (FR)
(72) Inventeur: Joutang, Jean-Luc, F-60660 Rousseloy (FR); Bernard, Jean-Luc, F-60600 Glencourt Breuil Le Vert (FR); Bocquet, Eric, F-60290 Rantigny (FR); Soukatchoff, Pascal, F-54690 Lay Saint Christophe (FR)
(74) Mandataire: Muller, René

(56) Documents cités:
- DE-A- 3 601 736
- FR-A- 938 033
- GB-A- 1 504 620
- CHEMICAL ABSTRACTS, vol. 113, no. 14, 1 Octobre 1990 Columbus, Ohio, US; abstract no. 120004c, V.V.EFANOVA ET AL. 'Method of preparing a concrete mixture' page 300; & SU-A-1 574 563 (UKRANIAN INSTITUTE FOR ORGANIZING CONSTRUCTION IN WATER ECONOMY) 30 Juin 1990
- CHEMICAL ABSTRACTS, vol. 81, no. 1, 6 Janvier 1975 Columbus, Ohio, US; abstract no. 5788v, S.AOKI page 115; & JP-A-07 417 817 (NIPPON ASBESTOS CO.,LTD.) 16 Février 1974

## Description

La présente invention concerne un additif fibreux pour matériaux à base de ciment, notamment pour mortier ou béton. Elle concerne également des mortiers et des bétons comportant cet additif fibreux, ainsi que des produits réalisés à partir d'eux, et des procédés de fabrication de ces produits. Le terme mortier désigne ici un matériau à base de ciment, sable et eau, sans gravillons, alors que le terme de béton désigne un matériau à base de ciment, sable, gravillons et eau.

Il est connu des fabricants de béton ou de mortier ou des entreprises de constructions utilisant ces derniers, d'ajouter dans ces matériaux à base de ciment, lors de leur préparation, des fibres de verre ou de roche pour renforcer la structure du matériau une fois coulé et mûri. En particulier, l'ajout de fibres dans un béton ou un mortier améliore son comportement ductile après mûrissement. Les fibres de renforcement utilisées peuvent être en particulier des fibres dites 〈〈 textiles 〉〉, obtenues par filage-étirage et rassemblées en fils, ou de la laine de verre ou de roche, obtenue par éjection centrifuge en particulier au moyen d'un jeu de rouleaux rotatifs.

Lors de la gâchée de tels bétons ou mortiers, il est couramment rencontré des difficultés de mélangeage entre les agrégats du béton et de fibres du type laine de verre ou laine de roche. En effet, ces fibres se présentent sous la forme de balles comportant des paquets de fibres enchevêtrées présentant un volume extérieur important, qui sont difficiles à répartir de manière homogène dans le béton ou le mortier lors de sa préparation.

De plus, on constate que l'ajout de fibres conduit à une mauvaise maniabilité du matériau due à une réduction de sa fluidité. Pour pallier ce problème, il est fréquent que les utilisateurs ajoutent de l'eau en excès afin de retrouver la fluidité d'origine du béton ou du mortier. Cependant, cette solution nuit à la qualité de l'ouvrage réalisé après mûrissement, puisque le risque de fissuration est augmenté du fait de la présence excessive d'eau lors de la mise en oeuvre du béton ou du mortier.

De plus, il a été constaté que l'ajout de fibres de renforcement tend à diminuer le taux d'air occlus à l'intérieur du béton ou du mortier après mûrissement.

Par ailleurs, il est fréquent d'ajouter dans les matériaux à base de ciment, qu'ils contiennent ou non des fibres de renforcement, des plastifiants chimiques afin d'améliorer leur maniabilité. Il est également connu d'ajouter un produit chimique, d'origine organique et de compositions diverses, tel que des huiles animales et végétales, des agents mouillants ou des savons solubles, afin d'augmenter le taux d'air occlus dans le matériau après mûrissement. Ce produit chimique est également connu sous le nom d'entraîneur d'air.

Le taux d'air occlus est particulièrement important pour les caractéristiques des bétons ou des mortiers, car un taux d'air occlus élevé procure à l'état frais une meilleure ouvrabilité et une plus grande résistance à la ségrégation et, à l'état durci, une meilleure étanchéité et une meilleure résistance au gel et au dégel.

L'ajout de plastifiants chimiques ou d'un entraîneur d'air conduit à des résultats satisfaisants, mais augmente le coût du béton ou du mortier.

La présente invention a pour but de fournir un additif fibreux pour matériau à base de ciment, permettant d'apporter une solution à chacun des problèmes évoqués ci-dessus, et en particulier de permettre d'obtenir un mélange homogène et renforcé par des fibres, de favoriser la fluidité du matériau à base de ciment dans lequel il est ajouté, et dans certains cas, de remplacer totalement ou partiellement un plastifiant chimique et/ou un entraîneur d'air.

A cet effet, l'invention a pour objet un additif fibreux pour matériaux à base de ciment, notamment pour mortier ou béton, caractérisé en ce qu'il comporte de la laine de roche formée de fibres d'un diamètre moyen compris entre 6 et 25 µm et ensimée soit avec une huile minérale, soit avec une substance tensio-active seule ou associée à une substance anti-mousse.

Les fibres ont notamment un diamètre moyen compris entre 10 et 20 µm.

L'invention a en outre pour objet un mortier à extruder, du type comportant du ciment et du sable, caractérisé en ce qu'il comporte un additif fibreux tel que défini précédemment, et en ce que l'ensimage est formé d'huile ou d'une substance tensio-active associée à une substance anti-mousse.

Suivant un mode particulier de réalisation, ce mortier comporte en outre des fibres de renforcement du type textile.

Par ailleurs, l'invention a pour objet un produit en plaque mince réalisé à partir d'un tel mortier ainsi qu'un procédé de fabrication de ce produit en plaque mince, comportant une étape d'extrusion dudit mortier.

De plus, l'invention a également pour objet un mortier sec prêt à l'emploi, notamment mortier à projeter, du type comportant du ciment et du sable, caractérisé en ce qu'il comporte un additif fibreux tel que défini précédemment.

En outre, encore un autre objet de l'invention est un béton du type comportant du ciment, du sable, des gravillons, caractérisé en ce qu'il comporte un additif fibreux tel que défini précédemment.

Suivant un mode particulier de l'invention, ce béton est caractérisé en ce que l'ensimage est formé d'une substance tensio-active seule et en ce que le béton contient au moins 3 %, et de préférence 4 à 7 %, d'air occlus.

Un autre objet de l'invention est une glissière latérale de protection pour voie routière réalisée à partir de ce dernier béton.

L'invention sera mieux comprise à la lecture de la description qui va suivre, donnée uniquement à titre d'exemple.

L'additif fibreux selon l'invention est formé à base de laine de roche, dont la composition est classique et qui peut être l'une de celles figurant dans le tableau 1 ci-dessous, donné uniquement à titre d'exemple.

**TABLEAU 1**

| % | Laine de roche 1 | Laine de roche 2 |
|---|---|---|
| SiO₂ | 41,3 | 46 |
| Al₂O₃ | 13,2 | 13,7 |
| Fe₂O₃ | 0,8 | 3,2 |
| CaO | 38,1 | 22,9 |
| MgO | 3,9 | 10 |
| Na₂O | 0,4 | 2,4 |
| K₂O | 0,5 | 1,5 |
| MnO | 0,4 | 0,2 |
| SO₃ | 0,2 | 0,5 |
| P₂O₅ | 0,1 | 1,2 |
| TiO₂ | 0,5 | 0,7 |

Une composition de type basalte convient également, à titre de laine de roche particulière, pour la fabrication de l'additif fibreux suivant l'invention.

Le diamètre moyen des fibres formant la laine de roche est compris entre 6 et 25 µm, avantageusement entre 10 et 20 µm, et est préférentiellement égal à une valeur voisine de 15 µm. Il est à noter que les fibres de la laine de roche classique du commerce ont un diamètre moyen compris entre 3 et 5 µm. Le choix d'un diamètre élevé pour les fibres de la laine de roche ajoutée au ciment est destiné à faciliter la dispersion et le mélange dans la pâte cimentaire.

Une laine de roche entrant dans la composition de l'additif fibreux est obtenue par exemple en laissant tomber un filet de roche en fusion sur la surface périphérique de rouleaux rotatifs à axe horizontal, refroidis à l'eau. Le réglage du diamètre des fibres s'obtient alors par réglage du débit de la roche en fusion et de la vitesse de rotation des rouleaux. Ce procédé d'obtention, connu, permet d'obtenir des fibres ayant une longueur inférieure à quelques centimètres.

Il a été obtenu avec ce procédé, lors d'un premier essai, des fibres ayant un diamètre moyen de 11,24 µm pour un écart-type de la dispersion de 7,04, et qui ont été utilisées de manière satisfaisante dans l'additif fibreux.

Lors d'un second essai, des fibres ayant un diamètre moyen de 16,70 µm et pour un écart-type de 10,25 ont été obtenues et utilisées également avec succès dans l'additif fibreux.

Suivant un premier mode de mise en oeuvre de l'additif fibreux, la laine de roche est ensimée avec une huile minérale, par exemple l'huile disponible dans le commerce sous la marque MULREX ou sous la marque PROREX. Cette huile a pour fonction essentielle d'adoucir le 〈〈 toucher 〉〉 de la fibre et de retenir les poussières éventuelles sans induire de modification de comportement du béton (pas d'effet sur le taux d'air).

Suivant un deuxième mode de réalisation de l'additif fibreux, la laine de roche est ensimée avec une substance tensio-active. Cette substance tensio-active est par exemple une composition à base d'oxyde de laurylamine.

Suivant un troisième mode de réalisation, la substance tensio-active est associée, lors de l'ensimage, à une substance anti-mousse telle que du 〈〈 MOUSSEX 941 PL 〉〉, commercialisé en France par la Société PROTEX, ou du 〈〈 BEVALOID 770 〉〉, commercialisé en France par le Groupe RHONE-POULENC.

De manière surprenante, il a été constaté que l'additif fibreux, suivant l'un ou l'autre des modes de réalisation précédents, se mélange facilement et en quantité importante dans un béton ou un mortier lors de la gâche. Il est ainsi possible d'ajouter sans difficulté et de manière homogène jusqu'à 300 litres de l'additif fibreux (soit environ 50 kg) dans un mètre-cube de béton ou de mortier. Il est à noter toutefois que les fibres ensimées avec une huile nécessitent un malaxage nettement plus énergique pour obtenir une bonne homogénéité du matériau.

Ainsi, il est possible de mettre en oeuvre un béton ou un mortier facile à travailler et avec une répartition homogène des fibres sans qu'il soit nécessaire d'ajouter de l'eau en excès. Le béton ou le mortier ainsi formé conserve alors de bonnes qualités mécaniques après mûrissement.

Le but du traitement des fibres de laine de roche préconisé par l'invention n'est pas de les protéger ni d'empêcher l'eau de les atteindre comme on le souhaiterait pour des fibres putrescibles comme les fibres de cellulose par exemple. Au contraire, on préconise selon l'invention l'ajout d'agents tensioactifs pour améliorer la compatibilité avec l'eau par une meilleure dispersion aqueuse. L'huile, utilisée en faible quantité, ne sert qu'à bloquer les poussières et à faciliter la manutention.

L'additif fibreux selon l'invention peut également être mis en oeuvre avec un béton ou un mortier comportant des fibres de renforcement minérales classiques, c'est-à-dire du type dit textiles.

De plus, que le béton ou le mortier contienne ou non des fibres de renforcement textiles, la présence de l'additif fibreux avec ensimage tensio-actif seul améliore sa maniabilité, ce qui permet de réduire la quantité de plastifiant chimique éventuellement ajouté dans celui-ci ou bien même de le supprimer.

La combinaison dans un béton, ou surtout dans un mortier, de fibres de renforcement du type textile et de l'additif fibreux selon l'invention permet l'obtention de caractéristiques avantageuses complémentaires. Les fibres de renforcement assurent en effet de bonnes caractéristiques du matériau après mûrissement, et en particulier, améliorent son caractère ductile, alors que l'additif fibreux selon l'invention confère au béton une plage d'élasticité élargie.

Dans le cas de l'utilisation d'un additif fibreux dont les fibres sont ensimées par une substance tensio-active seule, c'est-à-dire sans substance anti-mousse, on constate un accroissement du taux d'air occlus à l'intérieur du béton ou éventuellement du mortier. On constate également une réduction de la valeur du cône d'Abrams (affaissement du cône) lorsque l'additif fibreux est mis en oeuvre, ce qui facilite et rend possible le décoffrage de béton ou de mortier à l'état frais.

Le tableau 2 ci-dessous fournit des résultats expérimentaux relatifs au taux d'air occlus et à la valeur du cône d'Abrams, pour deux bétons standards pour glissières d'autoroutes, différant par leurs types d'agrégats.

**TABLEAU 2**

| béton n°1 | plastifiant | entraîneur d'air | additif fibreux | cône d'Abrams | air occlus |
|---|---|---|---|---|---|
| béton standard | 0,9 kg/m³ | 0,6 kg/m³ | 0 | 4,7 cm | 5,2 % |
| béton avec additif fibreux | 0,9 kg/m³ | 0 | 4,5 kg/m³ | 2 à 3,5 cm | 6 à 7,5% |

| béton n°2 | plastifiant | entraîneur d'air | additif fibreux | cône d'Abrams | air occlus |
|---|---|---|---|---|---|
| béton standard | 0,9 kg/m³ | 0,9 kg/m³ | 0 | 3 cm | 4,5 % |
| béton avec additif fibreux | 0,9 kg/m³ | 0 | 3,5 kg/m³ | 2 à 3 cm | 5 à 7,3% |

Ainsi, des bétons ou éventuellement des mortiers à air occlus peuvent avantageusement être mis en oeuvre en ajoutant l'additif fibreux dont l'ensimage est formé d'une substance tensio-active seule, en remplacement partiel ou total des entraîneurs d'air actuellement utilisés. Un tel béton peut être utilisé dans la construction routière, notamment pour réaliser des glissières latérales de sécurité pour autoroutes.

L'additif fibreux réduisant la valeur de l'affaissement mesurée par le 〈〈 cône d'Abrams 〉〉, il est possible de décoffrer le béton encore frais. Cette caractéristique permet d'obtenir des gains de productivité importants lors de la réalisation par exemple des glissières latérales précitées, par la technique dite de coffrage glissant.

Dans le cas des bétons mis en oeuvre dans des coffrages, l'utilisation de l'additif fibreux permet par ailleurs un écoulement amélioré du béton dans le coffrage, dû à sa bonne fluidité. En particulier, le béton enrobe de manière satisfaisante les ferraillages dans le cas de béton armé et emplit totalement le coffrage, garantissant ainsi un bon état de surface après décoffrage. De plus, on constate un 〈〈ressuage〉〉 important du béton, c'est-à-dire une élimination plus élevée qu'à l'accoutumée de l'eau excédentaire du béton (comme du mortier d'ailleurs).

De même, des mortiers à extruder, par exemple pour la réalisation de produits en forme de plaques minces, peuvent avantageusement recevoir lors de leur gâchage un additif fibreux selon l'invention dont l'ensimage est formé d'huile ou d'une substance tensio-active associée à une substance anti-mousse. Avec des taux de 8 à 15 % de l'additif fibreux, on peut obtenir des produits minces de 4 à 6 cm d'épaisseur ayant une résistance en flexion de 12 à 17 MPa. On constate également un accroissement possible de la cadence d'extrusion.

Il est à noter en outre que l'additif fibreux selon l'invention peut avantageusement être incorporé dans un mortier à projeter adapté pour être appliqué par voie sèche ou voie humide. En effet, on a constaté qu'aucune des fibres formant l'additif ne fait saillie à la surface de la couche déposée par projection. De plus, la présence de fibres améliore la tenue du mortier projeté, notamment lorsqu'il est frais.

La propriété précitée d'absence de saillie des fibres à la surface des produits finis s'observe en fait sur tous les produits réalisés à partir de matériaux à base de ciment contenant l'additif fibreux selon l'invention.

De même, l'additif fibreux selon l'invention peut également être incorporé dans des mortiers ou bétons secs vendus prêts à l'emploi, afin de faciliter leur mise en oeuvre en ajoutant de l'eau et/ou d'en améliorer les caractéristiques mécaniques.

Il est à noter que les divers produits d'ensimage précités peuvent être projetés facilement sur les fibres en cours de réalisation, sans contrainte particulière.

## Revendications

1. Additif fibreux pour matériaux à base de ciment, notamment pour mortier ou béton, **caractérisé en ce qu'**il comporte de la laine de roche, formée de fibres d'un diamètre moyen compris entre 6 et 25 µm et ensimée soit avec une huile, soit avec une substance tensio-active seule ou associée à une substance anti-mousse.

2. Additif fibreux selon la revendication 1, **caractérisé en ce que** les fibres ont un diamètre moyen compris entre 10 et 20 µm.

3. Mortier à extruder, du type comportant du ciment et du sable, **caractérisé en ce qu'**il comporte un additif fibreux selon la revendication 1 ou 2, et **en ce que** l'ensimage est formé d'huile ou d'une substance tensio-active associée à une substance anti-mousse.

4. Mortier selon la revendication 3, **caractérisé en ce qu'**il comporte en outre des fibres de renforcement du type textile.

5. Mortier sec prêt à l'emploi, notamment mortier à projeter, du type comportant du ciment et du sable, **caractérisé en ce qu'**il comporte un additif fibreux selon la revendication 1 ou 2.

6. Béton du type comportant du ciment, du sable, des gravillons, **caractérisé en ce qu'**il comporte un additif fibreux selon la revendication 1 ou 2.

7. Béton suivant la revendication 6, **caractérisé en ce que** l'ensimage est formé d'une substance tensio-active seule et **en ce que** le béton contient au moins 3 %, et de préférence 4 à 7 %, d'air occlus.

8. Produit en plaque mince réalisé à partir d'un mortier selon la revendication 3 ou 4.

9. Glissière latérale de protection pour voie routière réalisée à partir d'un béton selon la revendication 7.

10. Procédé de fabrication d'un produit en plaque mince selon la revendication 8, comportant une étape d'extrusion dudit mortier.

## Claims

1. Fibrous additive for cement-based materials, in particular for mortar or concrete, characterised in that it comprises mineral wool formed from fibres having an average diameter of between 6 and 25 µm and sized either using an oil, or using a surface-active agent alone or associated with an anti-foaming agent.

2. Fibrous additive according to claim 1, characterised in that the fibres have an average diameter of between 10 and 20 µm.

3. Mortar to be extruded, of the type comprising cement and sand, characterised in that it comprises a fibrous additive according to claim 1 or 2, and in that the sizing agent is formed from oil or from a surface-active agent associated with an anti-foaming agent.

4. Mortar according to claim 3, characterized in that it. further comprises reinforcement fibres of the textile type.

5. Ready-for-use dry mortar, in particular mortar to be sprayed, of the type comprising cement and sand, characterised in that it comprises a fibrous additive according to claim 1 or 2.

6. Concrete of the type comprising cement, sand, gravel, characterized in that it comprises a fibrous additive according to claim 1 or 2.

7. Concrete according to claim 6, characterized in that the sizing agent is formed from a surface-active agent alone and in that the concrete contains at least 3%, and preferably from 4 to 7%, of occluded air.

8. Product in the form of a thin plate produced from a mortar according to claim 3 or 4.

9. Lateral crash barrier for highways produced from a concrete according to claim 7.

10. Process for manufacturing a product in the form of a thin plate according to claim 8, comprising an extrusion stage for the mortar.

## Patentansprüche

1. Faserförmiger Zusatzstoff für Materialien auf der Basis von Zement, insbesondere für Mörtel oder Beton, **dadurch gekennzeichnet, daß** er Gesteinswolle umfaßt, die aus Fasern mit einem mittleren Durchmesser von 6 bis 25 µm gebildet und mit einer Schlichte überzogen ist, welche entweder ein Öl oder eine oberflächenaktive Substanz ist, die allein bzw. zusammen mit einem Schaumverhütungsmittel auftritt.

2. Faserförmiger Zusatzstoff nach Anspruch 1, **dadurch gekennzeichnet, daß** die Fasern einen mittleren Durchmesser von 10 bis 20 µm besitzen.

3. Fließzupressender Mörtel des Typs, der Zement und Sand umfaßt, **dadurch gekennzeichnet, daß** er einen faserförmigen Zusatzstoff gemäß Anspruch 1 oder 2 enthalt, **und daß** die Schlichte aus Öl oder einer oberflachenaktiven Substanz, die zusammen mit einem Schaumverhütungsmittel auftritt, gebildet ist.

4. Mörtel nach Anspruch 3, **dadurch gekennzeichnet, daß** er außerdem Verstärkungsfasern vom textilen Typus enthält.

5. Anwendungsfertiger trockener Mörtel, insbesondere aufzuspritzender Mörtel, des Typs, welcher Zement und Sand umfaßt, **dadurch gekennzeichnet, daß** er einen faserförmigen Zusatzstoff gemäß Anspruch 1 oder 2 enthält.

6. Beton des Typs, welcher Zement, Sand und Kies umfaßt, **dadurch gekennzeichnet, daß** er einen faserförmigen Zusatzstoff gemäß Anspruch 1 oder 2 enthält.

7. Beton nach Anspruch 6, **dadurch gekennzeichnet, daß** die Schlichte aus einer oberflächenaktiven Substanz allein gebildet ist, **und daß** der Beton mindestens 3 % und vorzugsweise 4 bis 7 % eingeschlossene Luft enthält.

8. Erzeugnis in Form einer dünnen Platte, hergestellt aus einem Mörtel gemäß Anspruch 3 oder 4.

9. Leitplanke für Straßenfahrbahnen, hergestellt aus einem Beton gemäß Anspruch 7.

10. Verfahren zur Herstellung eines Erzeugnisses in Form einer dünnen Platte gemäß Anspruch 8, welches eine Stufe zum Fließpressen des Mörtels enthält.
